# EUROPÄISCHE PATENTANMELDUNG

(11) **EP 1 935 696 A1**
(43) Veröffentlichungstag der Anmeldung: **25.06.2008**
(21) Anmeldenummer: 07019413.9
(22) Anmeldetag: 04.10.2007
(51) Int. Cl.: B60K 5/00, B60K 17/00, B62D 21/15, B60R 21/00

(54) **Kraftfahrzeug mit einer Sicherheitseinrichtung**

(30) Priorität: 22.12.2006 DE 102006062334
(71) Anmelder: AUDI AG, 85045 Ingolstadt (DE)
(72) Erfinder: Goldhofer, Gerhard, 85049 Ingolstadt (DE)
(74) Vertreter: Engelhardt, Harald

(57) **Zusammenfassung**

Bei einem Kraftfahrzeug mit einer in seinem Frontbereich angeordneten, aus einem Motor und einem Getriebe bestehenden Antriebsaggregat ist eine Einrichtung vorgesehen, durch welche die Verbindung zwischen dem Motor und dem Getriebe gelöst wird, wodurch bei einem Frontaufprall das Eindringen des Antriebsaggregats in den Fahrgastraum des Kraftfahrzeuges verhindert werden soll.

## Beschreibung

Die Erfindung bezieht sich auf ein Kraftfahrzeug, insbesondere Personenkraftwagen, mit einer in seinem Frontbereich angeordneten, aus einem Motor und einem Getriebe bestehenden Antriebsaggregat und einer Einrichtung, durch welche bei einem Frontaufprall das Eindringen des Antriebsaggregates in den Fahrgastraum des Kraftfahrzeuges verhindert wird.

Aus der DE 196 36 167 C1 ist eine Aggregatelagerung für ein Kraftfahrzeug bekannt, die einen Hilfsrahmen zum Tragen des Aggregats aufweist. Bei einem Frontaufprall entstehen durch die Kraftfahrzeugverformung Relativverschiebungen im Bereich der Lager, die zu einem Lösen der Lager führen, wodurch das Aggregat vom Fahrzeug freikommt und auf den Boden fallen kann, so dass die Fahrgastzelle über das Aggregat hinweg gleiten kann.

Die DE 22 41 651 A1 beschreibt einen Personenkraftwagen, dessen Antriebseinheit in Fahrtrichtung vorne an einem Drehlager gelagert ist und in Fahrtrichtung hinten von einem Lager mit Sollbruchstelle gehalten wird. Bei einem Aufprall von bestimmter Größenordnung bricht die hintere Verbindung, so dass die Antriebseinheit um das Drehlager nach hinten schwenkt und die Fahrgastzelle über den Motor hinweg nach oben gleiten kann.

Der vorliegenden Erfindung liegt die Aufgabe zugrunde, eine verbesserte Einrichtung zu schaffen, durch welche bei einem Frontaufprall das Eindringen des Antriebsaggregats in den Fahrgastraum des Fahrzeugs verhindert wird, ohne dass der Motor und/oder der Hilfsrahmen an seinen Befestigungspunkten gelöst wird und auf den Boden fällt.

Die Aufgabe wird dadurch gelöst, dass die Sicherheitseinrichtung die Verbindung zwischen dem Motor und dem Getriebe löst, derart dass bei Verschiebung des Antriebsaggregats in Richtung auf den Fahrgastraum zu das Getriebe nach unten hin abgelenkt wird.

Durch die vorgeschlagene Einrichtung wird also nicht das komplette, aus Motor und Getriebe bestehende Antriebsaggregat gelöst, sondern nur dasjenige Teil, nämlich das Getriebe, welches ursächlich für eine Beeinträchtigung des Fahrgastraumes bei einer entsprechend hohen Aufprallgeschwindigkeit ist. Bei dem üblichen Fahrzeugaufbau führen bei einem Frontcrash die hohe Festigkeit von Motor und Getriebe sowie deren starrer Verbund, insbesondere bei sogenannten Offset-Lastfällen durch die unsymmetrische Belastung der Struktur und des Motors zu einem starken Getriebeeinschlag im Tunnelbereich. Da dort auch meist ein Teil der Sitzführungen der Vordersitze angeordnet ist, kann dies zu einer ungünstigen Sitzkinematik und damit zu schlechten Insassenwerten führen, da ein optimales Eintauchen in den Airbag und in die Gurte nicht mehr gegeben ist.

Weiterhin besteht die Gefahr, dass der Tunnel aufreißt, womit die geforderte Strukturintegrität nicht mehr gegeben ist. Um dies zu verhindern, ist es bekannt, den Tunnel aus meist hochfestem Stahl zu verstärken. Dies wirkt sich jedoch ungünstig auf das Gewicht aus und erhöht die Herstellungskosten. Durch die vorgeschlagene Entkopplung von Motor und Getriebe kann der oben beschriebene Getriebeeinschlag vermieden oder deutlich vermindert werden. Das Lösen der starren Verbindung zwischen Motor und Getriebe, schafft die Voraussetzung dafür, dass bei Verschiebung des Antriebsaggregats in Richtung auf den Fahrgastraum zu das Getriebe nach unten hin abgelenkt wird. Es ist also nicht unbedingt notwendig, dass das gesamte Getriebe vom Motor gelöst wird; vielmehr ist es in manchen Fällen ausreichend, wenn das Getriebe relativ zum Motor nur so nach unten verschwenkt wird, dass es nicht in den Tunnelbereich gelangt.

Zweckmäßig ist, wenn ein Sensor vorgesehen ist, der ab einer vorbestimmten, unfallbedingten Auswertegröße ein Signal ausgibt, auf das hin das Getriebe gelöst wird. Solche, im Frontbereich des Fahrzeugs angeordnete Sensoren sind an sich bekannt und dienen dazu, dass nur ab einer entsprechend hohen Aufprallgeschwindigkeit bzw. Verformung die Sicherheitseinrichtung aktiviert wird.

Gemäß einer vorteilhaften Ausgestaltung kann der Sensor einen mechanischen Fühler umfassen, dessen Verschiebung und/oder Verformung das Signal ausgibt. Ein solcher mechanischer Sensor ist sehr kostengünstig und zeichnet sich durch eine kaum zu übertreffende Zuverlässigkeit aus. Im vorliegenden Fall kann er bspw. so angeordnet sein, dass er aktiviert wird, wenn die vor dem Motor angeordneten Bauteile bis zum Frontbereich des Motors verschoben werden und die Verschiebung des Motors selbst eingeleitet wird.

Besonders vorteilhaft ist, wenn der Sensor mit einer Kolben-Zylinder-Einheit in Verbindung steht, durch welche bei Druckbeaufschlagung das Lösen des Getriebes vom Motor eingeleitet wird. Der Entkopplungsmechanismus umfasst also einen Hubzylinder, wobei der erforderliche Druck zur Entriegelung von Motor und Getriebe über eine Deformation des Fahrzeugs erreicht und mittels Gestänge oder einer Druckleitung an die Entriegelungsvorrichtung bis in den Verbindungsbereich zwischen Motor und Getriebe weitergeleitet wird. Der Druck wird dann dazu benutzt, über eine geeignete Vorrichtung die Entkopplung durchzuführen. Je nach der baulichen Ausführung und Auslegung kann das Druckniveau der Entkopplungsvorrichtung und darüber der Zeitpunkt der Entkopplung gesteuert werden. Eine solche Kolben-Zylinder-Einheit mit einem geeigneten Fluid ist neben einer sehr hohen Zuverlässigkeit besonders auch dadurch von Vorteil, dass die Energie zum Entkoppeln von Motor und Getriebe beim Aufprall selbst erzeugt wird.

Alternativ ist es natürlich auch möglich, dass zum Lösen des Getriebes ein über den Sensor auslösbarer Sprengsatz vorgesehen ist. Ein solcher Sprengsatz kann über einen einfachen Kontaktsensor und eine elektrische Leitung ausgelöst werden; eine Kolben-Zylinder-Einheit sowie Leitungen für das Fluid sind nicht notwendig. Dadurch ergibt sich eine größere Freiheit bei beengten Platzverhältnissen. Außerdem können zur Auslösung des Sprengsatzes auch Signale aus anderen Sicherheitseinrichtungen des Fahrzeuges, bspw. für den Airbag, alleinig oder zusätzlich herangezogen werden.

## Patentansprüche

1. Kraftfahrzeug, insbesondere Personenkraftwagen, mit einer in seinem Frontbereich angeordneten, aus einem Motor und einem Getriebe bestehenden Antriebsaggregat und einer Einrichtung, durch welche bei einem Frontaufprall das Eindringen des Antriebsaggregates in den Fahrgastraum des Kraftfahrzeugs verhindert wird, **dadurch gekennzeichnet, dass** durch die Einrichtung die Verbindung zwischen dem Motor und dem Getriebe gelöst wird, derart, dass bei Verschiebung des Antriebsaggregats in Richtung auf den Fahrgastraum zu das Getriebe nach unten hin abgelenkt wird.

2. Kraftfahrzeug nach Anspruch 1, **gekennzeichnet durch** einen Sensor, der ab einer vorbestimmten, unfallbedingten Auswertegröße ein Signal ausgibt, auf das hin das Getriebe gelöst wird.

3. Kraftfahrzeug nach Anspruch 2, **dadurch gekennzeichnet, dass** der Sensor einen mechanischen Fühler umfasst, dessen Verschiebung und/oder Verformung das Signal ausgibt.

4. Kraftfahrzeug nach Anspruch 2, **dadurch gekennzeichnet, dass** der Sensor mit einer Kolben-Zylinder-Einheit in Verbindung steht, durch welche bei Druckbeaufschlagung das Lösen des Getriebes vom Motor eingeleitet wird.

5. Kraftfahrzeug nach einem der Ansprüche 2 bis 3, **dadurch gekennzeichnet, dass** zum Lösen des Getriebes ein über den Sensor auslösbarer Sprengsatz vorgesehen ist.
